# EUROPÄISCHE PATENTANMELDUNG

(11) **EP 2 295 476 A2**
(43) Veröffentlichungstag der Anmeldung: **16.03.2011**
(21) Anmeldenummer: 10192054.4
(22) Anmeldetag: 06.11.2006
(51) Int. Cl.: C08F 8/06, C09D 4/00, C08K 5/00, C09J 4/00

(54) **Lacke mit Sauerstoff-Indikatorfunktion zum Beschichten oder Verkleben sowie damit hergestellte Produkte**

(30) Priorität: 07.11.2005 DE 102005005289; 07.11.2005 DE 202005001760 U; 07.11.2005 DE 102006033489
(62) Teilanmeldung aus: 06819281.4
(71) Anmelder: Fraunhofer-Gesellschaft zur Förderung der angewandten Forschung e.V., 80686 München (DE)
(72) Erfinder: Amberg-Schwab, Sabine, 97250 Erlabrunn (DE); Burger, Annette, 97080 Würzburg (DE); Weber, Ulrike, 97295 Waldbrunn (DE); Xalter, Rainer, 97102 Freiburg (DE); Nique, Somchith, 97249 Eisingen (DE)
(74) Vertreter: Olgemöller, Luitgard Maria

(57) **Zusammenfassung**

Die vorliegende Erfindung betrifft ein Lackmaterial, umfassend eine Matrix aus einem zumindest teilweise organischen Polymeren sowie mindestens eine Komponente, die nach geeigneter Triggerung gegenüber Sauerstoff reaktiv sind. Diese Komponente kann die Gegenwart von Sauerstoff anzeigen. Das Lackmaterial eignet sich insbesondere als Beschichtungslack oder als Klebstoff. Die Erfindung betrifft weiterhin ein mit einer Beschichtung aus dem genannten Lackmaterial versehenes Substrat, ein Verbundmaterial aus einer Mehrzahl von Schichten, die mit diesem Lackmaterial verbunden wurden, sowie Herstellungsverfahren hierfür. In einer besonderen Ausführungsform ist die Matrix aus einem anorganisch-organischen Hybridpolymeren gebildet; sie kann jedoch auch rein organisch aufgebaut sein. Die gegenüber Sauerstoff reaktive Komponente kann entweder in die Matrix eingebettet oder kovalent darin eingebunden sein.

## Beschreibung

Fast unmerklich für die meisten Verbraucher haben in jüngster Zeit immer mehr Produkte in die Supermarktregale Einzug gefunden, deren Verpackungen in der Fachwelt mit dem Schlagwort "Active Packaging" versehen werden. Unter diesem Begriff werden so unterschiedliche Systeme wie Sauerstoffzehrer ("Oxygen Scavenger"), Feuchteregulatoren, CO₂-Emitter, CO₂-Absorber, Ethylenabsorber u. v. m. zusammengefasst. Der jeweilige Effekt und der daraus resultierende Vorteil hinsichtlich Produktqualität und/oder Verlängerung der Haltbarkeit sind für den Kunden in der Regel nicht erkennbar. In die Verpackung integrierte, für den Kunden unsichtbare Systeme setzen sich aber trotzdem zunehmend durch. Ein Beispiel soll an dieser Stelle genügen: Wo auch immer Bier in PET-Flaschen angeboten wird, kann man mit Sicherheit davon ausgehen, dass im Flaschenmaterial oder Flaschenverschluss ein Sauerstoff-Scavenger enthalten ist. Nur dadurch lässt sich für dieses hoch oxidationsempfindliche Produkt trotz der im Vergleich zu Glas viel höheren Sauerstoffdurchlässigkeit von PET eine angemessene Lagerzeit garantieren.

Sauerstoff kann auf vielfältige Weise zum Verderb von Lebensmitteln oder zu Funktionsstörungen anderer Produkte beitragen. Er wirkt nicht nur direkt oxidativ auf bestimmte Produktbestandteile, sondern ermöglicht in vielen Fällen auch das Wachstum aerober Mikroorganismen, so dass als Konsequenz Farbe, Geschmack, Konsistenz oder dgl. beeinträchtigt werden, ggf. der Nährwert abnimmt und zudem die Gefahr mikrobieller Verseuchung besteht. Die Funktion von Sauerstoff-Scavengern kann zum einen darin bestehen, den Restsauerstoffgehalt von 0.5-2%, der beim Verpacken unter Schutzgas (sog. "MAP", modified atmosphere packaging) im Kopfraum verbleibt, sowie den im Produkt gelösten Sauerstoff in möglichst kurzer Zeit zu eliminieren. Zum anderen sollen sie über einen möglichst langen Zeitraum den durch die Barriereverpackung permeierenden Sauerstoff aufnehmen und somit insgesamt die Haltbarkeit von oxidationsempfindlichen Produkten wesentlich verlängern.

Um Informationen über den Erschöpfungsgrad des Scavengers bzw. über die tatsächliche Sauerstoffkonzentration in der Verpackung zu erhalten, kann es wünschenswert sein, dass zusätzlich ein Indikator mit entsprechender Funktion in die Verpackung integriert ist.

Verbindungen, welche Sauerstoff aufnehmen und dauerhaft chemisch binden, werden als Sauerstoff-Scavenger bezeichnet. Die Funktion dieser Scavenger ist vielfältig. In Verpackungen beispielsweise kann sie darin bestehen, eine praktisch sauerstofffreie Atmosphäre herzustellen und aufrecht zu erhalten, um eine verlängerte Haltbarkeit des Packgutes zu gewährleisten. Dazu müssen sie einerseits restlichen Sauerstoff, der sich im Kopfraum der Verpackung befindet, möglichst rasch entfernen. Andererseits stellen sie, sofern sie in das äußere Verpackungsmaterial integriert sind, eine aktive Barriere gegen von außen in die Verpackung migrierenden Sauerstoff dar. Interessant sind Scavenger auch für andere Bereiche, z. B. für technische Verpackungen oder kompakte Teile.

Es kann prinzipiell zwischen zwei Ausführungsformen unterschieden werden: Die vor allem im asiatischen Raum gebräuchliche ist die Beigabe von Scavenger-haltigen Sachets (Päckchen) in die Verpackung. Diese Variante findet allerdings auf den westlichen Märkten kaum Akzeptanz. Die fortschrittlichere, aber technisch schwieriger zu realisierende Ausführung ist die Inkorporation von Scavengern in Verpackungssysteme wie Kronkorken, Polymerfolien oder Plastikflaschen.

Bei den bislang entwickelten Scavengern kann nach eisenbasierten, Sulfit-basierten, Ascorbat-basierten und enzymbasierten Systemen sowie oxidierbaren Polyamiden und ethylenisch ungesättigten Kohlenwasserstoffen unterschieden werden.

Eisenbasierte Scavenger beruhen auf der Oxidation von metallischem Eisen zu Eisen(II)- und Eisen(III)-hydroxid. Die Reaktion benötigt neben bestimmten Promotoren, die beschleunigend wirken, Feuchtigkeit, um den Scavenging-Prozess zu starten. Damit ist ein Trigger-Mechanismus gegeben, der die gezielte Aktivierung ermöglicht. Allerdings sind solche Scavenger nur für Produkte mit einem hohen Feuchtigkeitsgehalt geeignet. Beispiele und Polymere mit einer eingearbeiteten Scavenger-Komposition sind Oxyguard von Toyo Seikan Kaisha und ShelfPlus 02 von Ciba Specialty Chemicals. Letzteres kann je nach Ausführung sowohl zu Folien als auch zu Trays verarbeitet werden. Generelle Nachteile bei der Einarbeitung von pulverförmigen Scavengern in Polymerfolien sind allerdings die verringerte Transparenz und die Verschlechterung der mechanischen Eigenschaften dieser Folien.

Bei Sulfit-basierten Scavengern erfolgt die Sauerstoffaufnahme unter Oxidation von Kaliumsulfit zu Sulfat. Auch hier erfolgt die Aktivierung über Feuchtigkeit. Die Scavenger-Mischung wird in Polymere eingearbeitet, die erst bei erhöhten Temperaturen, etwa beim Pasteurisieren oder Sterilisieren, eine ausreichend hohe Wasserdampfdurchlässigkeit aufweisen. Patenten der American Can Company zufolge sind Kronkorken für Bierflaschen das vorwiegende Einsatzgebiet.

Effektiver als rein Sulfit-basierte Systeme erwiesen sich allerdings Ascorbat-basierte Scavenger bzw. Mischungen aus Ascorbat und Sulfit. Bei diesen erfolgt eine Oxidation von Ascorbinsäure zu Dehydroascorbinsäure. Hauptsächlich wird Natrium-L-ascorbat eingesetzt, es können aber auch Derivate der Ascorbinsäure verwendet werden. Die Oxidationsreaktion wird durch Katalysatoren, bevorzugt Eisen- und Kupfer-Chelatkomplexe, beschleunigt. Trigger ist wiederum Feuchtigkeit, so dass auch hier der Einsatz auf Produkte mit hohem Wassergehalt limitiert ist. Ascorbat-basierte Scavenger werden sowohl als Sachets angeboten wie auch in Kronkorken und Flaschenverschlüsse eingearbeitet.

An enzymbasierten Scavengern ist lediglich ein Produkt im Markt, nämlich der Bioka Oxygen Absorber von Bioka, der in Sachet-Form vertrieben wird. Er beruht auf der von Glucoseoxidase katalysierten Oxidation von Glucose zu Gluconsäure und Wasserstoffperoxid, welches durch ein weiteres Enzym, Katalase, unschädlich gemacht wird, indem es zu Wasser und Sauerstoff abgebaut wird. Die Vorteile dieses Systems liegen in der lebensmittelrechtlichen Unbedenklichkeit der natürlichen Komponenten.

Zu den oxidierbaren Polymeren gehören neben den im nächsten Abschnitt behandelten ethylenisch ungesättigten Polymeren auch die oxidierbaren Polyamide. In der Hauptsache wird das Nylon Poly-(m-xyxylenadipamid) eingesetzt. Die Aktivierung des Scavenging-Prozesses erfolgt über Photoinitiation mittels UV-Strahlung, als Oxidationskatalysator ist Kobalt zugesetzt. Kommerziell erhältliche, auf diesem Prinzip beruhende Produkte kommen vorwiegend in Blends für PET-Flaschen zum Einsatz. Polyamide haben allerdings den Nachteil, dass sie mit thermoplastischen Polymeren unverträglich sind und die Heißsiegelung mitunter Schwierigkeiten bereitet.

Ethylenisch ungesättigte Kohlenwasserstoffe bilden die vielseitigste Gruppe der oxidierbaren Substrate. Zum einen sind im Stand der Technik Sachets beschrieben, die ungesättigte Fettsäuren als aktive Komponente enthalten. Vor allem aber sind in dieser Gruppe eine Vielzahl an oxidierbaren Polymeren enthalten: Polybutadien, Polyisopren und Copolymere davon (US 5,211,875; US 5,346,644), aber auch Acrylate mit Cycloolefinen als Seitenketten (WO 99/48963; US 6254804). Nur letztere erlangten bisher tatsächlich Marktreife, denn sie bieten zwei entscheidende Vorteile gegenüber anderen oxidierbaren ethylenisch ungesättigten Polymeren: einerseits verhindert die zyklische Struktur des Olefins die Entstehung niedermolekularer Oxidationsprodukte, die sich schädlich auf die Qualität des Packgutes auswirken und lebensmittelrechtlich problematisch sind. Andererseits wird die Struktur des Polymers nicht durch den Oxidationsprozess zerstört, wie es bei den oben genannten Polymeren der Fall ist, deren Materialeigenschaften sich mit zunehmendem Oxidationsgrad verschlechtern (WO 99/48963). Hergestellt werden diese Harze, allesamt Terpolymere vom Typ Poly-(ethylen-methylacrylat-cyclohexenylmethylacrylat) (EMCM), durch teilweise Umesterung des Methylacrylats mit dem entsprechenden Alkohol. Sie sind einsetzbar für steife und flexible Verpackungen und zeichnen sich durch hohe Transparenz, hohe Kapazität und schnelle Kinetik aus. Nach Herstellerangaben beträgt die Sauerstoffkapazität der Folien z. B. 45-78 ccm pro Gramm Folie; dieser Wert kann innerhalb weniger Tage nach Aktivierung der Scavenger-Funktion erreicht werden. Aufgrund des UV-Trigger-Mechanismus eignen sich diese Acrylate sowohl für trockene als auch für feuchte Produkte. Der Oxidationsprozess ist wie bei den oxidierbaren Polyamiden kobaltkatalysiert.

Die Funktion von Qualitätsindikatoren in Lebensmittelverpackungen besteht allgemein darin, dem Produzenten, Händler oder auch Verbraucher Informationen über den Qualitätszustand eines Produktes zu geben. Am Markt befindliche Lösungen umfassen auf der einen Seite die Temperatur-Zeit-Indikatoren (TTI), die das Überschreiten einer bestimmten Temperatur anzeigen oder die Temperatur-Zeit-Geschichte eines Produkts aufnehmen. Darüber hinaus lassen sich eine Reihe unterschiedlicher Qualitätsindikatoren zu der Gruppe der Frischeindikatoren zusammenfassen, die eine direkte Auskunft über den Frischegrad des Packgutes geben. Sie detektieren Abbauprodukte, die beim Verderb von Produkten freigesetzt werden, oder Mikroorganismen bzw. deren Stoffwechselprodukte. Bereits kommerziell genutzt wird ein Frischeindikator, der flüchtige Amine durch einen Farbumschlag anzeigt.

Zu den Qualitätsindikatoren lassen sich auch Sauerstoffindikatoren rechnen, die den Sauerstoffgehalt in MAP-Barriere-Verpackungen, die vorteilig mit einem Sauerstoff-Scavenger kombiniert sind, anzeigen. Wie die Temperatur-Zeit-Indikatoren geben sie nur indirekt Aufschluss über die Produktqualität, da keine eindeutige Korrelation zwischen der Sauerstoffkonzentration in der Verpackung und der Qualität besteht. Obwohl einige Lösungsansätze zum Thema Sauerstoffindikation in Lebensmittelverpackungen beschrieben sind, sind bislang nur wenige kommerzielle Produkte am Markt erhältlich. In Tablettenform vertrieben wird ein reversibles System, bestehend aus einem Farbstoff aus der Gruppe der Oxazine oder Thiazine, reduzierenden Sacchariden und einer alkalischen Komponente (US 4,169,811). In Abwesenheit von Sauerstoff wird der Farbstoff vollständig reduziert, bei Kontakt mit Sauerstoff stellt sich rasch wieder die ursprüngliche Farbe ein. Sauerstoffsensible Leukofarbstoff-haltige Tinten zum Bedrucken von Verpackungen (US 6,254,9696) bzw. mit Leukofarbstofflösung getränkte Cellulose (US 4,526,752) stellen ähnliche Entwicklungen dar. Da bei diesen Indikatoren restliches Reduktionsmittel vor der Applikation der Tinte bzw. Lösung entfernt wird, erhält man einen irreversiblen Farbumschlag in Gegenwart von Sauerstoff, so dass ein einmaliges Überschreiten einer kritischen Sauerstoffkonzentration ein dauerhaftes Signal ergibt. Dies bringt allerdings den Nachteil mit sich, dass die Auftragung auf bzw. das Einbringen in die Verpackung unter striktem Sauerstoffausschluss erfolgen muss. Eine Alternative hierzu stellen Entwicklungsansätze dar, den Farbstoff nach dem Verpacken via Photoreduktion in einen sauerstoffsensiblen reduzierten Zustand zu versetzen. Dies kann etwa über eine Riboflavin-vermittelte Photoreduktion von Oxazinen oder Thiazinen (WO 95/29394) oder die direkte Photoreduktion von Chinon- und Anthrachinonfarbstoffen (US 5,958,254) geschehen. Die Komponenten können ohne Funktionsverlust in Polymeren immobilisiert werden. Ein andersartiges Konzept zur Sauerstoffdetekion basiert auf der Oxidation von Fe(II) zu Fe(III). Letzteres bildet mit bestimmten organischen Molekülen wie beispielsweise Gallussäure stark farbige Komplexe. Dieser Indikatortyp benötigt jedoch wie die eisenbasierten Scavenger-Systeme Feuchtigkeit, um die Funktionsfähigkeit zu gewährleisten. Da es sich um einen anfangs reversiblen Prozess handelt, kann die beim Verarbeiten und Verpacken eingetretene Oxidation mittels Photoreduktion rückgängig gemacht und das System in den Ausgangszustand zurückgesetzt werden (WO 98/03866; WO 99/36330).

Nachteilig ist am bisherigen Stand der Technik:
- Scavenger sind homogen im Folienmaterial eingearbeitet, dadurch können die Polymereigenschaften negativ beeinflusst werden
- Es gibt keine Scavenger-Beschichtung, mit der unterschiedlichste Oberflächen funktionalisiert/aktiviert werden könnten
- Die Triggermechanismen sind nicht auf alle Produktsorten zu übertragen (feuchtegetriggert)
- Die Farbreaktionen bei kombinierten Scavenger/Indikator-Systemen sind ungünstig: grau nach bräunliche Verfärbung
- Die Systeme des Stands der Technik sind größtenteils nicht für einen Lebensmittelkontakt geeignet

Aufgabe der vorliegenden Erfindung ist es, Ausgangsmaterialien für Verpackungs- und sonstige Systeme bereitzustellen, die mit diesen Ausgangsmaterialien ausgerüstet Sauerstoffscavenger und/oder Sauerstoffindikator-Eigenschaften aufweisen, ohne dass die hierfür benötigten Substanzen durch homogenes Einarbeiten in die entsprechenden Bulkmaterialien der Verpackungs- oder sonstigen Systeme deren hauptsächliche Eigenschaften negativ beeinflussen.

Diese Aufgabe wird gelöst durch die Bereitstellung neuartiger triggerbarer, beschichtungsfähiger und/oder verklebbarer Matrixsysteme (Lacke) mit Reaktivität gegenüber Sauerstoff (als Sauerstoff-Scavenger- und/oder Sauerstoffindikator), die sich im Prinzip als Beschichtungsmaterial oder (Kaschier-)Kleber für jedes beliebige Substrat eignen, unabhängig von dessen chemischer Zusammensetzung oder Geometrie, so dass sie entweder als anschließend ausgehärtete oder getrocknete Schicht auf diesem Substrat vorhanden sind und/oder Substrate wie Folien oder starre Schichten miteinander verbinden, z. B. kaschieren können.

Dies bedeutet für die Scavenger-Systeme eine Kapazität von vorzugsweise mindestens 20 ccm Sauerstoff pro Gramm sauerstoffzehrendem Polymer, verbunden mit einer möglichst schnellen Kinetik, z. B. um den Restsauerstoff in MAP-Verpackungen rasch zu eliminieren und so eine qualtitätsmindernde Oxidation des Packgutes zu verhindern. Des Weiteren soll die Scavenger-Wirkung möglichst lange erhalten bleiben, um den durch die Verpackung migrierenden Sauerstoff kontinuierlich aufzunehmen. Aus verpackungstechnischer Sicht ist zudem eine hohe Transparenz verklebter/kaschierter oder beschichteter Folien mit Scavenger-Funktion wünschenswert, da der Kunde Produkte mit sichtbarem Inhalt bevorzugt. Diese Ziele können mittels transparenter Lacke realisiert werden, die über gebräuchliche Lackapplikationsverfahren als Scavenger Schichten auf beliebige Substrate, z. B. auf Folien aufgebracht oder als Kaschier- oder sonstige Klebematerialien zum Verkleben solcher Substrate eingesetzt werden können. Der Vorteil solcher Schichten und Kleber liegt darin, dass sie in Kombination mit beliebigen Folien- und sonstigen Substratmaterialien und damit auch solchen Materialien eingesetzt werden können, die sich selbst nicht als Matrixsysteme für Scavengermaterialien eignen, etwa als Migrationsbarriere oder Lebensmittelkontaktschicht. Die Vorteile der erfindungsgemäßen Lacke sind darüber hinaus eine häufig bessere chemische Stabilität und Temperaturbeständigkeit der resultierende Schichten oder verklebten/kaschierten Schichtverbünde sowie, im Falle von Beschichtungen, eine höhere Abriebfestigkeit.

Bei den Indikatorsystemen gehört vor allem Beschichtungsfähigkeit zu den gestellten Anforderungen. Es sollen sich klebfreie Schichten auf beliebigen Substraten erzeugen lassen. Der Vorteil solcher Schichten liegt darin, dass sie in Kombination mit dem Substratmaterial und damit auch mit solchen Materialien eingesetzt werden können, die sich selbst nicht als Matrixsysteme für Indikatorsysteme eignen. Die grundlegende Zielsetzung für die Entwicklung der Indikatoren lautet, mittels eines optisch wahrnehmbaren Signals Informationen über den Qualitätszustand des verpackten Produktes zu geben. Eine Möglichkeit hierzu ist, dass das Erschöpfen der Scavenger-Kapazität angezeigt wird. Wenn die Kapazität so ausgelegt ist, dass die Restsauerstoffmenge im Kopfraum der Verpackung nicht zur völligen Erschöpfung des Scavengers führt, kann ein Umschlag des Indikators in diesem Fall entweder auf ein Leck in der Verpackung hinweisen, durch welches massiv Sauerstoff eindringt, oder darauf, dass ab dem Zeitpunkt des Umschlags der permeierende Sauerstoff nicht mehr abgefangen werden kann. In beiden Fällen ist daher mit einem Anstieg der Sauerstoffkonzentration in der Verpackung zu rechnen und die Qualität des Produktes gefährdet. Die zweite Möglichkeit ist die direkte Indikation der tatsächlich vorhandenen Sauerstoffkonzentration. Bei dieser Variante soll der Indikator beim Erreichen einer kritischen Konzentration von z. B. ca. 2% Sauerstoff im Kopfraum (abhängig vom jeweiligen Packgut) vor möglichen Qualitätsmängeln warnen.

Eine ebenfalls wichtige Anforderung unter verpackungs- und verfahrenstechnischen Aspekten ist, dass die Möglichkeit des gezielten Aktivierens ("Triggern") der Scavenger- wie auch der Indikator-Funktion sichergestellt werden muss, um eine vorzeitige Reaktion mit Sauerstoff während der Produktion, Lagerung und im Verpackungsprozess zu unterbinden.

Ein wichtiger Punkt dieser Erfindung ist die Entwicklung geeigneter Matrices für die jeweiligen aktiven Verbindungen. Für Scavenger-Matrices bedeutet dies, dass sie die Möglichkeit einer Einbettung in eine Matrix (die eine rein organische oder eine anorganisch-organische Hybridmatrix sein kann) oder, bevorzugt, einer kovalenten Einbindung der sauerstoffzehrenden Verbindung(en) bieten und den Scavenging-Prozess möglichst effizient ablaufen lassen sollten. Indikator-Matrices müssen ebenfalls den- chemischen oder physikalischen - Einbau der aktiven Komponente(n) erlauben und ein möglichst deutlich wahrnehmbares optisches Signal zulassen.

Die vorliegende Erfindung stellt in Lösung der obigen Aufgabe ein Lackmaterial bereit, das eine Matrix aus einem zumindest teilweise organischen Polymeren sowie mindestens eine Komponente, ausgewählt unter Komponenten, die nach geeigneter Triggerung gegenüber Sauerstoff reaktiv sind, enthält. Die Komponenten, die nach Triggerung gegenüber Sauerstoff reaktiv sind, sind vorzugsweise ausgewählt unter Komponenten, die sauerstoffzehrend sind, oder Komponenten, die die Gegenwart von Sauerstoff anzeigen können. Beide genannten Varianten sind-jede für sichwesentliche Ausgestaltungen der Erfindung. Grundsätzlich lassen sie sich auch - in ein und demselben Lack oder in verschiedenen Lackschichten des Endproduktesmiteinander kombinieren.

Das Lackmaterial der vorliegenden Erfindung kann vorzugsweise als Beschichtungslack eingesetzt werden. Alternativ und ebenfalls bevorzugt kann das Lackmaterial als Klebstoff für das Verkleben von vorzugsweise schichtförmigen Materialien eingesetzt werden, beispielsweise als Kaschierkleber. Dabei sind Beschichtungmaterialien sowohl zum Absorbieren von unerwünschtem Sauerstoff als auch als Material geeignet, mit dessen Hilfe die Gegenwart von Sauerstoff angezeigt werden soll. Wenn das Lackmaterial als Kleber eingesetzt werden soll, eignet sich vor allem, aber nicht ausschließlich der Einsatz als Sauerstoff-Scavenger. Ein Kleber mit Sauerstoffindikatorfunktion kann allerdings in solchen Fällen verwendet werden, in denen diejenige Schicht, die den Kleber von der möglicherweise sauerstoffhaltigen Sphäre trennt, relativ gut sauerstoffdurchgängig ist. Es ist darauf hinzuweisen, dass für beide Verwendungen teilweise, jedoch nicht in allen Fällen, das gleiche Material eingesetzt werden kann. So können manche Beschichtungslacke an der Luft, ggf. thermisch oder mit Hilfe von Bestrahlung, zu einer harten, kratzfesten Beschichtung ausgehärtet werden, sind aber bei Einstellung geeigneter Viskositäten gleichermaßen als Kleber, z. B. Kaschierkleber, geeignet.

Für die Matrix des Lackmaterials können unterschiedliche Materialien eingesetzt werden. Geeignet sind in allen Fällen anorganisch-organische Hybridpolymere, beispielsweise ORMOCERE^{®}, die nach Sol-Gel-Verfahren aus hydrolysierbaren und kondensierbaren, ggf. organisch vernetzbaren Silanen hergestellt werden, wobei bei Bedarf andere Metall-Kationen kovalent in die Si-O-Si-Matrix eingebettet sein können. Diesbezüglich darf auf die reichlich vorhandene Patent- und sonstige Literatur verwiesen werden. So kann die Matrix beispielsweise unter Verwendung eines Di- oder Trialkoxysilans, gegebenenfalls zusätzlich unter Verwendung eines Metallalkoxids hergestellt sein, das insbesondere unter Alkoxiden des Aluminiums, Zirkons, Titans oder Zinns ausgewählt ist.

In einer Reihe von Fällen, vor allem bei der Herstellung von Lacken mit Sauerstoffindikator-Funktion, kann die Matrix stattdessen auch aus einem rein organischen Polymermaterial bestehen. Soll ein Beschichtungsmaterial hergestellt werden, ist dabei Bedingung, dass das Material nach Trocknen klebfrei ist. Geeignete Materialien hierfür sind z. B. Polyvinylalkohol und/oder ein methacrylsäurehaltiges Polymer oder ein Polymer auf Basis von Polyurethan (PUR), das allein oder in wesentlichen Teilen oder in Kombination mit anderen Materialien die Matrix bildet.

Insbesondere dann, wenn es sich bei der Komponente, die nach geeigneter Triggerung gegenüber Sauerstoff reaktiv ist, um eine sauerstoffzehrende Komponente handelt, kann diese kovalent in die Matrix eingebunden sein. Dabei ist es besonders vorteilhaft, hierbei als sauerstoffzehrende Komponente einen silangebundenen Rest einzusetzen. Alternativ oder kumulativ kann es sich bei der sauerstoffzehrenden Komponente um eine Verbindung handeln, die ein zyklisches Olefin, z. B. einen Cyclohexenrest, enthält. Dieses kann über eine kürzere oder längere organische Spacergruppe, z. B. eine C₂-C₆-Alkylengruppe, an das Rückgrat der Verbindung oder an ein Siliciumatom gebunden sein.

Alternativ kann die Komponente, die nach Triggerung die Gegenwart von Sauerstoff anzeigen kann, über ionische oder Van-der-Waals-Kräfte bzw. Wasserstoffbrückenbindungen in die Matrix eingebunden ist. Diese Matrix kann dann wie oben erwähnt entweder eine anorganisch-organische Matrix (z. B. ein ORMOCER)^{®} oder eine rein organische Matrix sein.

Als Komponente, die nach Triggerung die Gegenwart von Sauerstoff anzeigen kann, eignet sich eine solche, bei der der Sauerstoff durch einen Farbumschlag angezeigt wird, beispielsweise ein Leukofarbstoff. Beispiele für geeignete Leukofarbstoffe sind Leukomalachitgrün und Methylenblau. Wird Leukomalachtigrün eingesetzt, enthält das Lackmaterial vorzugsweise zusätzlich Säure (Protonen), ein Reduktionsmittel und einen Photosensibilisator. Als Reduktionsmittel ist beispielsweise Ascorbinsäure geeignet. Als Photosensibilisator kann Hämatoporphyrin IX eingesetzt werden. Wird Methylenblau eingesetzt, enthält das Lackmaterial in bevorzugter Weise zusätzlich ein Redoxsystem, beispielsweise Ethylendiamintetreaessigsäure und/oder Riboflavin.

Unabhängig davon, ob nun die Gegenwart von Sauerstoff angezeigt oder das Lackmaterial zum Wegfangen von Sauerstoff eingesetzt werden soll, erfolgt das Triggern der Komponente(n) bequemerweise mit Hilfe aktinischer Strahlung, vorzugsweise in Gegenwart eines Photosensitizers.

Sind die Lackmaterialien der vorliegenden Erfindung für den Lebensmittelbereich vorgesehen, werden entsprechende, lebensmittelrechtlich zulässige Matrices eingesetzt. Diese sind dem Fachmann bekannt. Als sauerstoffzehrende Komponente eignen sich für diesen Anwendungsbereich beispielsweise cyclische Olefine, als Sauerstoffindikator beispielsweise Methylenblau.

Die Lackmaterialien der vorliegenden Erfindung eignen sich nicht nur für Anwendungen im Lebensmittelbereich, sondern auch für sonstige technische Zwecke. Beispielsweise können Einkapselungsfolien oder sonstige Verpackungsmaterialien für OLEDs, Solarzellen und anderes damit hergestellt werden.

Die Lackmaterialien der vorliegenden Erfindung werden in der Regel in Gegenwart von Wasser oder wässrigen Lösungsmitteln hergestellt, denen je nach Bedarf weitere Komponenten zugesetzt sind. Zur Herstellung können Sol-Gel-Verfahren eingesetzt werden, zum Beispiel zur Herstellung von Matrices aus oder mit hydrolysierbaren und kondensierbaren Silanen; hierfür können beispielsweise Kondensationskatalysatoren beigegeben werden, die unter Umständen jedoch auch gleichzeitig eine Funktion in der Matrix ausüben können wie Aminosilane. Sowohl reine Katalysatoren als auch weitere Funktionen besitzende Katalysatoren sind im Stand der Technik in reichem Maße bekannt.

Damit die jeweiligen Lacke die geeignete Konsistenz und Viskosität erhalten, können ihnen je nach Bedarf Lösungsmittel als Verdünnungsmittel zugesetzt oder entzogen werden. Über die Viskosität kann auch teilweise die Klebrigkeit eingestellt werden, die man im Übrigen auch über andere Parameter, z. B. die Molekülgrößen, beeinflussen kann.

Mit dem Lackmaterial der vorliegenden Erfindung können beliebige Substrate beschichtet werden. Nach Trocknen und/oder Aushärten entsteht ein mit einer stabilen Beschichtung versehenes Substrat, das für entsprechende Anwendungen geeignet ist. So können starre oder flexible, ein- oder mehrschichtige Verpackungsmaterialien mit dem Lackmaterial beschichtet werden, beispielsweise Folien. In den daraus hergestellten Verpackungen weist diese Beschichtungen vorzugsweise ins Innere der Verpackung, um dort Restsauerstoff oder im Laufe der Zeit durch das Verpackungsmaterial permeierenden Sauerststoff zu absorbieren und/oder diesen bzw. ein entstandenes Leck anzuzeigen. Alternativ kann das Lackmaterial als Kleber eingesetzt werden, mit dessen Hilfe z. B. ein Verbundmaterial aus mindestens zwei Schichtstoffen geschaffen wird. Vorzugsweise handelt es sich um einen Klebstoff, der sich als Kaschierkleber zur Herstellung von Kaschierfolien oder dgl. eignet. Natürlich können die Lackmaterialien der vorliegenden Erfindung auch sowohl als Beschichtung als auch als (Kaschier-)Kleber an bzw. in ein und demselben Material eingesetzt werden. Außerdem ist es natürlich möglich, ein (Verpackungs-)Material bereitzustellen, das sowohl eine Beschichtung aufweist, die sauerstoffzehrende Funktionen besitzt, als auch eine solche, die sauerstoffanzeigende Funktionen besitzt. Dieses kann beispielsweise auf seiner einen Seite, ggf. der Innenseite, mit einer Beschichtung versehen sein, die aus einem erfindungsgemäßen Lackmaterial mit einer Komponente besteht, die die Gegenwart von Sauerstoff anzeigen kann, wobei diese Schicht zur Innenseite hin mit einer Schicht überschichtet ist, die mit einem erfindungsgemäßen Lackmaterial hergestellt wurde, das eine sauerstoffzehrende Komponente enthält. Die beiden Schichten können natürlich auch in umgekehrter Reihenfolge aufgebracht sein.

In einer besonders bevorzugten Ausführungsform der vorliegenden Erfindung enthält das mit dem erfindungsgemäßen Lackmaterial beschichtete oder verklebte Substrat bzw. Verbundmaterial zusätzlich mindestens eine Schicht oder Folie, die den Durchtritt von Sauerstoff hemmt oder verhindert (eine sogenannte passive Barriere; im Gegensatz dazu fungieren Sauerstoffscavenger als aktive Barrieren). Solche Schichten und Folien sind im Stand der Technik bekannt. Ein für solche Schichten gut geeignetes Material ist ein anorganisch-organisches Hybridpolymer. Diese Schicht wird vorzugsweise als äußerste Schicht des letztendlich gebildeten Schicht- oder Verbundmaterials gebildet.

Die beigefügten Figuren illustrieren die Erfindung weiter, wobei
**Figur 1** den Mechanismus der übergangsmetallkatalysierten Oxidation zyklischer Olefine zeigt,
**Figur 2** die Verarbeitung und Verfärbung einer Methylenblau-Indikatorlösung zeigt,
**Figur 3** die chemische Grundlage für die Oxidation von Leukomalachitgrün mit Singulettsauerstoff und anschließende Dehydratisierung zeigt,
**Figur 4** die Erzeugung von Singulettsauerstoff durch Photosensibilisierung veranschaulicht,
**Figur 5** die UV/Vis-spektroskopische Verfolgung der Reaktion der LMG/Hp-Schicht in Abhängigkeit der Sauerstoffkonzentration vor und nach der Belichtung zeigt,
**Figur 6** die Sauerstoffkapazität einer Sauerstoffscavengerschicht vor und nach UV-Triggerung zeigt,
**Figur 7** die UV/Vis-spektroskopische Verfolgung der Sauerstoffindikatorfunktion einer Methylenblau-basierten Indikatorschicht ziegt,
**Figur 8** die Sauerstoffkapazität einer scavengerhaltigen Kleberschicht in einem Folienlaminat gemäß Beispiel **3** zeigt, und
und **Figur 9** die Sauerstoffkapazität einer scavengerhaltigen Kleberschicht in einem Folienlaminat gemäß Beispiel **4** zeigt.

Nachstehend soll die Erfindung im Einzelnen näher erläutert werden.

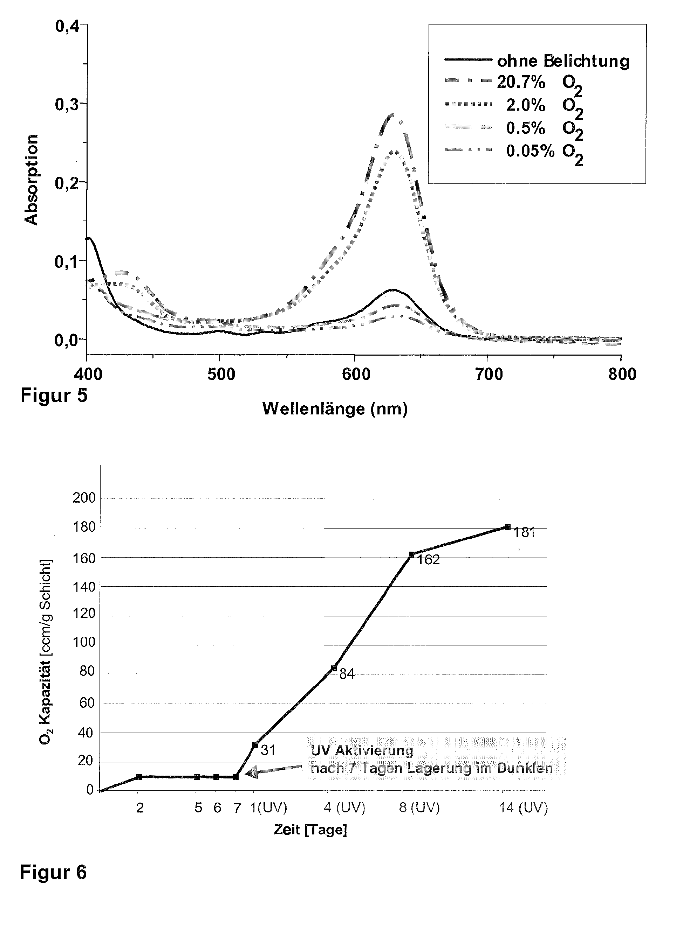

In einer speziellen Ausführungsform der Erfindung ist es gelungen, ein sauerstoffzehrendes System (einen Lack) zu entwickeln, welches z. B. auf der Oxidation eines zyklischen Olefins unter Kobalt-Katalyse beruht. Dieses System erreicht eine Sauerstoffkapazität von z. B. 160 ccm pro Gramm Schicht nach einer Messdauer von **8** Tagen (siehe **Figur 6****).** In dieser Variante ist der Lack als Beschichtungslack ausgestaltet und durch einfache Beschichtung auf unterschiedliche Substrate z. B. Verpackungsmaterialien aufbringbar. Alternativ kann der Lack als Kaschier- oder sonstiges Klebematerial ausgebildet sein. Damit lassen sich beliebige Substrate wie (Einzel-) Schichtmaterialien und/oder Folien miteinander verkleben, z. B. miteinander kaschieren. Kapazität, Reaktivität und Kinetik sind jeweils abhängig vom eingesetzten System. Der entscheidende Unterschied im Vergleich zu den Scavengern der WO 99/48963 und US 6,254,804 liegt bei den erfindungsgemäßen Lacken in den bevorzugten Ausgestaltungen in der Verwendung eines polymeren Rückgrats für das sauerstoffzehrende System sowie in der Gestaltung der Lacke als Beschichtungs- oder (Kaschier-)Kleber. Das polymere Rückgrat besteht hier besonders bevorzugt aus einer alkylmodifizierten Hybridpolymermatrix, die über ein Sol-Gel-Verfahren dargestellt wird. Das Prinzip beruht auf der z. B. metallkatalysierten Hydrolyse von funktionalisierten Di- oder Trialkoxysilanen oder anderen hydrolysierbaren Silanen. Das Verfahren zeichnet sich durch eine einfache Durchführung (nur einen Reaktionsschritt) bei moderaten Reaktionsbedingungen (Raumtemperatur) aus. Dies stellt einen entscheiden Vorteil gegenüber dem o.g. EMCM-Polymer Verfahren dar.

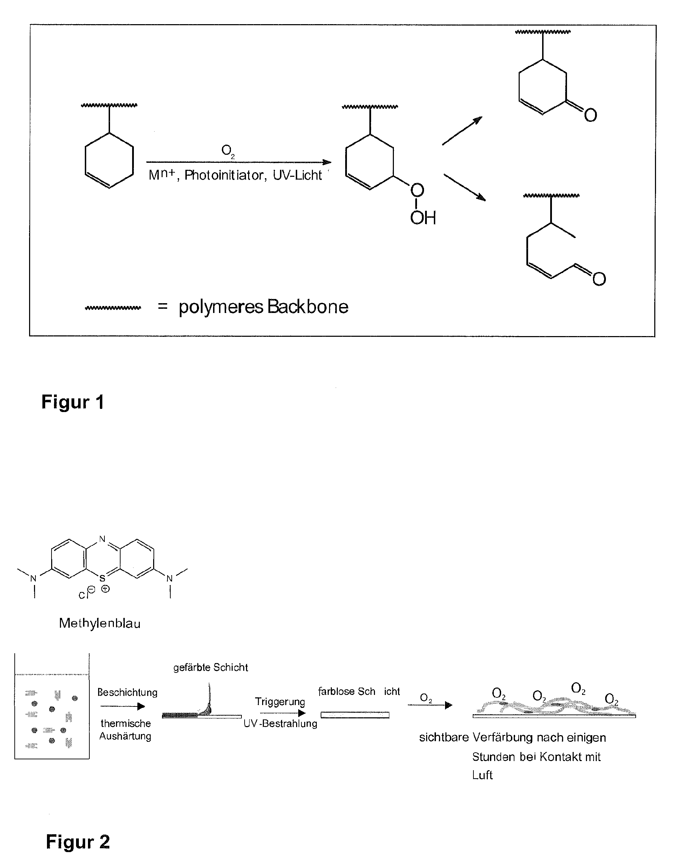

Im Hinblick auf die oxidierbare Olefineinheit erfolgt die bevorzugte Wahl eines zyklischen Olefins mit einer funktionellen Gruppe, die eine Anbindung an ein polymeres Rückgrat ermöglicht. Dadurch wird gewährleistet, dass die entstehenden Oxidationsprodukte an das polymere Netzwerk gebunden bleiben und nicht, wie bei azyklischen oxidierbaren Polymeren beobachtet, infolge hoher Flüchtigkeit und Migrationsneigung den Zusatz von Absorbern erfordern, um eine Verunreinigung des Packgutes zu verhindern. Wahrscheinliche Endprodukte des Scavenging-Prozesses mit zyklischen Olefinen sind α,β-ungesättigte Aldehyde und Ketone, die durch radikalische Oxidation an der reaktiven, mesomeriestabilisierten Allylposition gebildet werden, wie in **Figur 1** für die Cyclohexenylgruppe exemplarisch gezeigt.

Als Matrixsysteme für die erfindungsgemäßen triggerbaren Indikatorsysteme bestehend aus einem Redoxfarbstoff (wie z. B. Methylenblau oder Malachitgrün) werden erfindungsgemäß ebenfalls Hybridpolymere oder aber rein organische Polymere eingesetzt.

Bei Verwendung von Methylenblau ist die Schicht nach dem Auftrag und der Aushärtung blau gefärbt. Sie verliert ihre Farbe nach der UV-Triggerung. Dann ist die Schicht aktiv; bei Kontakt mit Sauerstoff verfärbt sie sich wieder blau (siehe Figur 2).

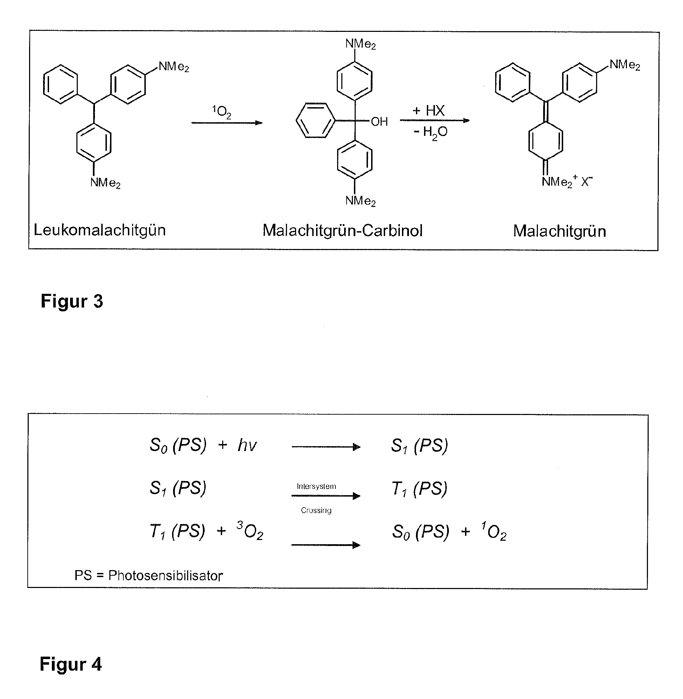

Als weiteres Beispiel für erfindungsgemäße Indikatorsysteme sei nachstehend das Leukomalachitgrün/Photosensibilisator-System beschrieben. Dieses System basiert auf der Beobachtung von Kautsky und seinen Mitarbeitern, dass Leukomalachitgrün (LMG), die Leukoform des Triphenylmethanfarbstoffs Malachitgrün, nicht mit atmosphärischem Triplett-Sauerstoff reagiert, wohl aber mittels des elektronisch angeregten, äußerst reaktiven Singulettsauerstoffs zu Malachitgrün oxidiert werden kann. Die Oxidation von LMG führt zunächst zum schwach farbigen Carbinol, das wiederum in Gegenwart von Säuren über eine schnelle Dehydratisierung zum eigentlichen Farbstoff Malachitgrün abreagiert **(****Figur 3****).**

Der für die Sauerstoff indizierende Farbreaktion benötigte Singulettsauerstoff kann mittels Photosensibilisierung erzeugt werden. Ein sogenannter Photosensibilisator (PS), der in der Regel selbst ein Farbstoff ist, absorbiert dabei Licht und wird dadurch in einen angeregten Zustand versetzt. Bei einem Singulett-Grundzustand S₀ des Sensibilisators kann diese Anregung nur wiederum in Singulettzustände S₁, S₂ usw. erfolgen. Innerhalb dieser angeregten Zustände findet in der Regel eine sehr rasche strahlungslose Deaktivierung in den niedrigsten angeregten Singulettzustand S₁ statt, der normalerweise die längste Lebensdauer besitzt. Bei bestimmten Molekülen ist die Wahrscheinlichkeit eines spinverbotenen Übergangs von dort aus in den energetisch niedrigsten Triplett-Zustand T₁ relativ hoch. Je höher die Rate dieses Intersystem Crossing bei einem Molekül im Vergleich zu den anderen möglichen Prozessen ausgehend von S₁ ist, desto höher ist die Quantenausbeute der Singulettsauerstoff-Generierung, d.h. desto effizienter ist es als Sensibilisator. Denn bei der Begegnung eines Moleküls im Zustand T₁, dessen Energie stets geringfügig unterhalb der des S₁-Zustands liegt, mit Sauerstoff, dessen Grundzustand natürlicherweise ein Triplett-Zustand ist, kann eine stoßinduzierte Triplett-Triplett-Annihilierung stattfinden. In deren Verlauf werden beide Reaktionspartner in einen Singulett-Zustand versetzt: der Sensibilisator in den Singulett-Grundzustand S₀, das Sauerstoffmolekül hingegen in den angeregten Singulettzustand ¹Δg, der eine im Vergleich zum Triplettzustand höhere Reaktivität aufweist. Darüber hinaus wird auch die Bildung von Singulettsauerstoff im deutlich energiereicheren ¹∑g⁺-Zustand sensibilisiert, der allerdings nur eine äußerst kurze Lebensdauer besitzt und sehr schnell in den ¹Δg-Zustand relaxiert. Insgesamt findet also eine Absorption von Licht durch den Sensibilisator, ein Wechsel des Spin-Zustands des Sensibilisators und eine anschließende Energieübertrag vom angeregten Sensibilisator auf das Sauerstoffmolekül statt, welche die Oxidationskraft des Sauerstoffs erhöht. Wie oft dieser Prozess stattfinden kann, hängt von der Photostabilität des Sensibilisators ab. Der gesamte Ablauf ist in der beigefügten Figur **4** skizziert.

Aufgrund seiner hohen Singulettsauerstoff-Quantenausbeute von durchschnittlich 0.73 ist es günstig, Hämatoporphyrin IX (Hp) (z. B. in Form des Dihydrochlorids) als Photosensibilisator einzusetzen, ein eisenfreies Häm, das auch in der Medizin zur Behandlung maligner Neoplasmen verwendet wird. Selbstverständlich können stattdessen auch andere Photosensibilisatoren verwendet werden, wie aus dem Stand der Technik bekannt.

Die Kombination von Leukomalachitgrün (LMG) und Photosensibilisator bietet die Möglichkeit, mit Hilfe von Licht die Indikatorwirkung zu aktivieren. Unter völligem Lichtausschluss ist das Indikatorsystem auch in Gegenwart von Sauerstoff in seinem Ausgangszustand stabil. Allerdings wird für die Indikatorreaktion eine konstante Illumination benötigt, da der Singulettsauerstoff nur in gleichzeitiger Präsenz von Licht und Sauerstoff gebildet wird. Hierin besteht ein Unterschied zu dem Trigger-Mechanismus des voranstehend beschriebenen Scavenger-Systems, bei dem eine einmalige UV-Bestrahlung einen kontinuierlichen Scavenging-Prozess in Gang setzt.

Die Funktionsweise des Systems LMG/mit hybridpolymerer Matrix wird in Abhängigkeit der O₂ Konzentration vor und nach der Belichtung in **Figur 5** dargestellt. Der Schwellenwert für die O₂-Indikation liegt bei diesem Ausführungsbeispiel bei 2 %.

Das Absorptionsmaximum des gebildeten Malachitgrün liegt bei 621 nm, eine deutlich schwächere Absorptionsbande befindet sich bei 427 nm. LMG selbst weist überhaupt keine Absorption im Sichtbaren auf.

Die erfindungsgemäßen Lacke können auf beliebige Substrate aufgebracht werden, um dort die Funktion des Sauerstoff-Abfangens (Sauerstoffscavenger-Schicht) und/oder die Funktion der Sauerstoff-Anzeige auszuüben. Beispiele für solche Substrate sind Verpackungsmaterialien, z. B. Folien oder auch flexible oder starre feste Verpackungsmaterialien. Sofern diese Materialien für den Lebensmittelbereich vorgesehen sind, sollten die erfindungsgemäßen Lacke lebensmittelrechtlich zulässig sein; hierfür lassen sich beispielsweise Schichten einsetzen, die Methylenblau enthalten. Die Lacke können natürlich auch für andere Zwecke als Verpackungsmaterialien eingesetzt werden; beispielsweise können sie für technische Folien, darunter für die Herstellung flexibler OLEDs bzw. flexibler Polymersolarzellen genutzt werden

Die erfindungsgemäßen Klebersysteme haben, wie erwähnt, ebenfalls die Form von Lacken und können eingesetzt werden, um beliebige Substrate wie (Einzel-) Schichtmaterialien und/oder Folien miteinander zu verkleben, z. B. miteinander zu kaschieren. Insbesondere eignen sie sich für das Kaschieren von Kunststoff- oder Papierfolien. Die Kleb- bzw. Kaschierklebeschicht übt dabei in Form einer Sauerstoffscavenger-Klebschicht die Funktion des Sauerstoff-Abfangens aus. Beispiele für Substrate, die für die Erfindung nutzbar sind, sind flexible Verpackungsmaterialien, z. B. Folien, oder starre und feste Verpackungsmaterialien. Sofern diese Materialien für den Lebensmittelbereich vorgesehen sind, sollten die erfindungsgemäßen Kleber-Lacke lebensmittelrechtlich zulässig sein. Die Lacke können natürlich auch für andere Zwecke eingesetzt werden.

Selbstverständlich können mit den erfindungsgemäßen Lacken (Beschichtungsmaterialien, Klebern) beschichtete bzw. verklebte/kaschierte Substrate weitere Beschichtungen aufweisen, die je nach vorgesehenem Verwendungszweck ausgewählt werden können. Ein wichtiges Beispiel sind passive Barriereschichten für Sauerstoff, wie sie beispielsweise aus der DE 196 50 286 C2 oder der DE 196 15 192 bekannt sind. Verbundfolien für den Verpackungsbereich können demnach beispielsweise aus einer Basis-Polymerfolie bestehen, auf die eine Schicht mit Sauerstoff-Fänger-Funktion (Sauerstoff-Scavenger-Schicht) gemäß der vorliegenden Erfindung und/oder eine Schicht mit Sauerstoff-Indikatorfunktion gemäß der vorliegenden Erfindung sowie, als eine innere oder die äußerste Schicht, eine Barriereschicht, z. B. eine solche, wie in einer der beiden oben genannten Schutzrechte offenbart, aufgebracht sind.

### A. Beispiele für Sauerstoffscavenger-Lacke und deren Anwendung

### Beispiel 1:

Beispiel für die Herstellung eines Beschichtungslacks mit kovalent gebundenem Sauerstoff-Scavenger.

38 mol-% 2-Cyclohexenylethyltriethoxysilan werden mit 38 mol-% Octyltriethoxysilan gemischt und mit 1-Methoxy-2-Propanol verdünnt und bei 20°C (Wasserbad) mit 2,05 g (114 mmol) 1 N Salzsäure 60 min hydrolysiert. Anschließend werden 24 mol-% Zirkonpropylate•2 EAA (Acetessigester) zugegeben und weitere 60 Minuten untergerührt. Photoinitiator (1 % auf Feststoffgehalt), Kobalt (350 mg bezogen auf Co⁺⁺), sowie Reduktionsmittel (1 % auf Feststoffgehalt) werden unmittelbar vor Applikation zugegeben.

### Feststoffgehalt: 33%

Die Applikation erfolgt mit einer Schichtdicke von 4g/m² auf PET-Folie von 12 µm Stärke; die Aushärtung erfolgt thermisch.

### Beispiel 2

Beispiel für die Herstellung eines Beschichtungslacks mit kovalent gebundenem Sauerstoff-Scavenger

### Hybridmatrix für das Sauerstoff-Scavenger System

| Su**b**stan**z** | **M** in **g**/mol | **M**ol% |
|---|---|---|
| CHEO | 272,46 | 40-47,5 |
| GLYEO | 278,42 | 40-47,5 |
| 1 n HCl | 18,02 | ½ stöch. (bezogen auf Silane) |
| AsB | 246,33 | 5-20 |
| EAA | 130,14 | |

CHEO und GLYEO werden mit 1 N Salzsäure versetzt und 22 Stunden bei Raumtemperatur gerührt. Danach wird die Komplexatlösung aus AsB und EAA zugegeben. Die Mischung wird anschließend bis zur vollständigen Hydrolyse der Silane gerührt.

### Sauerstoff-Scavenger System

| Lack | Photoinitiator | Cobaltsalz | Antioxidans |
|---|---|---|---|
| ORMOCER^{®}-Matrix | 1 GW% | 2 GW% | 1-5 GW% |

Cobaltsalz, Antioxidans und Photoinitiator werden in n-Propanol **g**elöst. Die Lösung wird dann mit Hybridmatrix vermischt.

### Abkürzungen:

- CHEO: 2-Cyclohexenylethyltriethoxysilan
- GLYEO: 3-Glycidoxypropyltriethoxysilan
- AsB: Aluminium-sec-butylat
- EAA: Acetessigester
- GW%: Gewichtprozent

Einsetzbare Photoinitiatoren sind z. B. Lucirin TPO oder Irgacure 184. Als Reduktionsmittel/Antioxidantien eignen sich: Vitamin E*, Irganox 1010*, Irgafos 168**, Irganox 1076**, Tinuvin 111**, Tinuvin 622**, Chimasserb 944**. laut CIBA: * food approval und **food contact approval

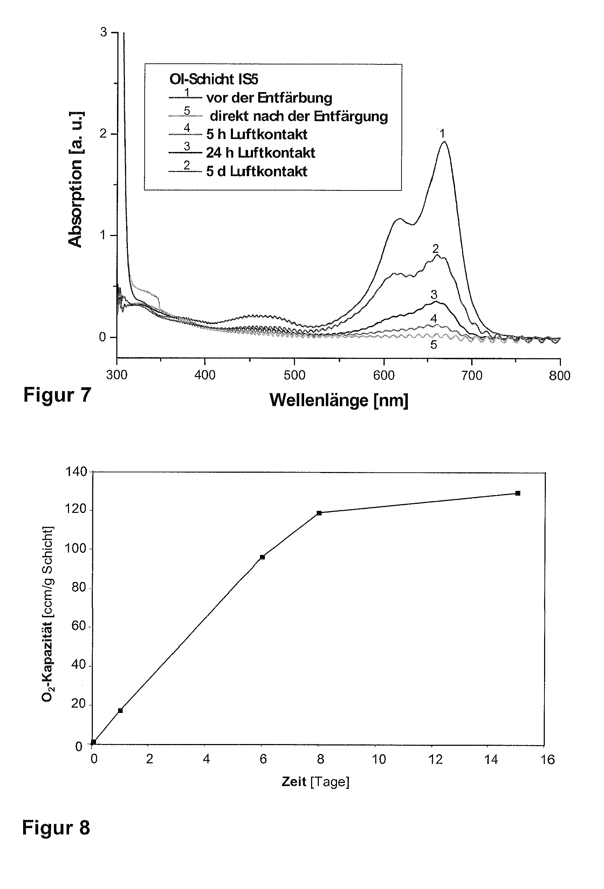

Eigenschaften zweier Sauerstoffscavenger-Schichten (Kapazitäten, Reaktivitäten und Kinetik jeweils systemabhängig):
Eigenschaften Scavenger-System 1: Die Sauerstoffaufnahme der Sauerstoffscavenger-Schicht vor und nach UV-Aktivierung ist in Figur 6 dargestellt.
Eigenschaften Scavenger-System 2: Die Sauerstoffaufnahme der Sauerstoffscavenger-Schicht nach sofortiger UV-Aktivierung ist in Figur 7 dargestellt.

### Beispiel 3:

Beispiel für die Herstellung einer Klebermatrix mit kovalent gebundenem Sauerstoff-Scavenger.

Ein Lack wurde hergestellt wie in Beispiel 1 angegeben und auf einen Feststoffgehalt von 33% eingestellt.

Die Applikation erfolgt mit einer Schichtdicke von 4g/m² auf PET-Folie von 12 µm Stärke; nach kurzer Vortrocknung wird eine zweite Folie (aus Papier oder Kunststoff wie PET) zugeführt. Die Aushärtung erfolgt thermisch.

Die Sauerstoffaufnahme der Sauerstoffscavenger-Schicht nach UV-Aktivierung ist in Figur 8 dargestellt.

### Beispiel 4

Beispiel für die Herstellung einer Klebermatrix mit kovalent gebundenem Sauerstoff-Scavenger

In eine acrylatbasierte, silanmodifizierte Matrix, bestehend aus silanmodifizierten Mehrfachacrylaten wie z. B. ethoxyliertem Bisphenol-A-diacrylat werden 10-40 Gew.-% Cyclohexenylethyltriethoxysilan sowie ein Photoinitiator (1-2 Gew.-%, bezogen auf den Feststoffgehalt der silanmodifizierten Matrix), Cobaltsalz (in einer Menge von etwa 2 Gew.-% Co2+)und ein Antioxidationsmittel (1-5 Gew.-%) eingearbeitet. Die Aufbringung und Aushärtung erfolgt wie in Beispiel 1.

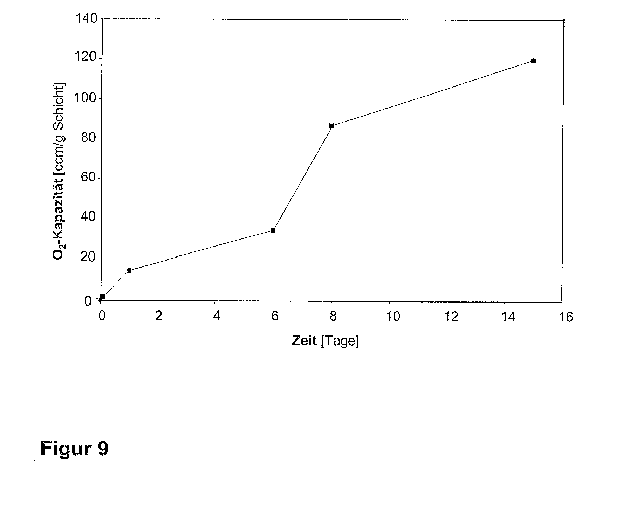

Die Sauerstoffaufnahme der Sauerstoffscanvenger-Schicht nach sofortiger UV-Aktivierung ist in **Figur 9** dargestellt.

### Kleber-Applikation

Die Applikation der Kleber kann mittels Rakelverfahren z. B. auf Corona-vorbehandelter CPP-Folie von 50 µm Stärke erfolgen. Die Kleberlacke können z. B. mit einem 30 µm Spiralrakel aufgetragen werden. Die Ziehgeschwindigkeit kann z. B. 12 mm/s betragen. Die Aushärtung erfolgt in allen Fällen vorzugsweise thermisch bei Temperaturen zwischen 40 und 130°C.

### Beispiel 5

In einen handelsüblichen Kaschierkleber (z. B. einen acrylat-basierten Klebstoff werden 10-40 Gew.-% Cyclohexenylethyltriethoxysilan, Cobaltsalz (2 % Co²⁺, bezogen auf den Feststoffgehalt der Klebemasse) und ein Antioxidationsmittel (1-5 Gew.-% bezogen auf den Feststoffgehalt der Klebemasse) eingearbeitet. Die Schichtdicke des Klebers wird durch Verdünnung mit Lösemitteln (z. B. Alkoholen) eingestellt. Der Auftrag wird mittels Rakel- oder Walzenapplication durchgeführt. Die Aushärtung erfolgt thermisch.

### Beispiel 6

**B**eispiel 5 wurde wiederholt, wobei jedoch ein Klebstoff auf Polyurethan-Basis eingesetzt wurde.

B. Beispiele für **S**auerstoffin**d**ikatoren-**B**eschichtun**g**slacken un**d** deren **A**nwendun**g**

### Beispiel 7

### Herstellung eines Beschichtungslacks mit eingebettetem Sauerstoff-Indikator (Methylenblau)

### A. Hybrid matrix für Methylenblau-Indikator-System

| Substanz | Menge [g/mol] | g |
|---|---|---|
| A. 200 mmol SR 295 | 325,34gmol-1 | 70,47g |
| B. Ethanol | | 693,00g =1000 ml |
| C. 100 mmol Dial-AMEO | 191,32 | 19,13g |
| D. 70 mmol N-MeAMMO | 193,32 | 13,53g |
| E. 500 mmol Wasser | | 9,0g |
| F. 100 mmol Triethylamin | 101,19 | 10,1g |

### Versu chsbeschrei bu ng:

A wird mit B verdünnt und die Mischung aus C und D hinzugetropft. Die Mischung wird nach fünfstündigem Rühren mit einer Mischung aus E und F versetzt und bis zur vollständigen Hydrolyse gerührt. Anschließend wird die Lacklösung mit einem Feststoffgehalt von 30% hergestellt.

### B. Herstellung des Beschichtungslacks

| Substanz | Menge [mmol] | Menge [mg] |
|---|---|---|
| Methylenblau | 0,021 | 8 |
| Rb-S | 0,029 | 15 |
| EDTA | 1 | 292,25 |
| GDMA | | 5000 |
| Lackmatrix (s. oben) | | 2000 |
| Ethylenglykol/Wasser | 4:1 (GW%) | 3000 |

0,7g Farbstoffgemisch, Ethylenglykol/Wasser und GDMA werden eingewogen. Die Mischung wird 5 Minuten bei Raumtemperatur gerührt und anschließend werden 70 mg Irgacure 184 zugegeben.

### Abkürzungen:

- SR 295: Pentaerythrit-tetraacrylat
- Dial-AMEO: 3-Aminopropyl-methyl-diethoxysilan
- N-MeAMMO: N-Methylaminopropyltrimethoxysilan
- RB-S: Riboflavin-5'-monophosphat Natriumsalz Hydrat
- EDTA: Ethylendiamintetraessigsäure
- GDMA: Glyceri n-1,3-di methacrylat

Die Eigenschaften der Sauerstoffindikator-Schicht (UV/Vis spektroskopische Verfolgung der Reaktion des Indikatorsystems (Methylenblau-System) sind in Figur 7 gezeigt.

### Beispiele 8a bis 8c:

### Herstellung von Beschichtungslacken mit eingebettetem Sauerstoff-Indikator (Malachitgrün)

### A. Herstellung der Matrices

8a 9.13 g (30.0 mmol) 2-(3-Triethoxysilylpropyl)-bernsteinsäureanhydrid werden mit 1.62 g (90.0 mmol) 0.1 N Salzsäure versetzt und bei Raumtemperatur bis zur vollständigen Hydrolyse und Anhydridöffnung gerührt (Hydrolysezeit: ca. 7 h). Das so erhaltene Hydrolysat wird mit der 20%igen Mowital-Lösung im Gewichtsverhältnis 1:1 (8aa), 1:2 (8ab) bzw. 1:3 (8ac) vermischt.
Feststoffgehalte: 8aa: 38.1%; 8ab: 31.8 %; 8ac: 28.4%
Aushärtung nach Beschichtung (siehe unten) 8aa: 40°C, 1 Tag; 8ab und 8ac: 80°C, 1.5 h

8b 15.6 g (66.0 mmol) 3-Glycidoxypropyltrimethoxysilan und 5.42 g (33.0 mmol) Propyltrimethoxysilan werden mit 21.0 g (100 Gew% bzgl. Silanen) Ethanol verdünnt und mit 0.246 g (1.00 mmol) Aluminium-sec-butylat versetzt. Nach Zugabe von 2.70 g (150 mmol) 0.1 N Salzsäure wird bei Raumtemperatur gerührt, bis die Hydrolyse abgeschlossen und das Epoxid vollständig geöffnet ist.
Hydrolysezeit: ca. 24 h
Feststoffgehalt: 30.6%
Aushärtung nach Beschichtung (siehe unten): 80°C, 1 h

8c 18.3 g (60.0 mmol) 2-(3-Triethoxysilylpropyl)-bernsteinsäureanhydrid und 1.98 g (10.0 mmol) Phenyltrimethoxysilan werden mit 9.15 g Ethanol verdünnt und mit 4.91 g (15.0 mmol; 6.39 g 76.8%ige Lsg. in *n*-Propanol) Zirkonium-n-propylat (4ca) bzw. 4.26 g (15.0 mmol) Titan-*n*-propylat (4cb) versetzt. Anschließend wird bei Raumtemperatur mit 2.43 g (135 mmol) 0.1 N Salzsäure bis zur vollständigen Hydrolyse und Öffnung des Anhydrids gerührt. Schließlich werden 3.24 g (15.0 mmol) Diphenylsilandiol zugegeben und unterrührt.
Hydrolysezeit: jeweils ca. 20 h
Feststoffgehalt: 4ca: 46.1 %; 4cb: 46.2%
Aushärtung nach Beschichtung (siehe unten): jeweils 80°C, 30 min.

### B. Herstellung der Beschichtungslacke

Alle Lacksysteme 8a (a-c), 8b und 8c (a und b) wurden mit 1,5 Gew.-% Ascorbinsäure als Reduktionsmittel und Komplexligand versetzt und mindestens 3 Stunden gerührt. Dann erfolgte die Zugabe von 2,4 Gew.-% Leukomalachitgrün und 2,4 Gew.-% HCl (6N). Abschließend wurden 500 ppm Hämatoporphyrin als Photosensibilisator zugegeben.

### C. Lackapplikation

Die Applikation der Lacke erfolgte mittels Rakelverfahren auf Corona-vorbehandelter CPP-Folie von 50 µm Stärke. Die Beschichtungslacke wurden mit einem 30 µm Spiralrakel aufgetragen. Die Ziehgeschwindigkeit betrug 12 mm/s. Die Aushärtung erfolgte in allen Fällen thermisch bei Temperaturen zwischen 40 und 130°C (siehe oben).

### Beispiel 9

### Herstellung der Beschichtungslösungen

### Beschichtungslösung 9a

| | |
|---|---|
| 0,2 - 1 mmol | Methylenblau |
| 0,1 - 0,7 mmol | Riboflavin 5'-monophosphat Natriumsalz Dihydrat |
| 30 ml 10%ig | Ethylendiamintetraessigsäure Dinatriumsalz Dihydrat |
| 75 g 25%ig | Polyviol-Lösung (Polyviol ist ein Polyvinylalkohol) |

Methylenblau und Riboflavin werden in Dinatriumsalz-Lösung gelöst und mit der Polyviol-Lösung vermischt. Die Mischung ist nach 4-stündigem Rühren bei Raumtemperatur gebrauchsfertig.
Viskosität der Lösung: 600 mPa.s
Aushärtung: thermisch
Schichtdicke: 4 g/m²

Eigenschaften der Sauerstoffindikator-Schicht:sind in Figur 7 als UV/Vis spektroskopische Verfolgung der Reaktion des Indikatorsystems gezeigt.

### Beschichtungslösung 9b:

10,0 g Luvimer 100 P (methacrylsäurehaltiges Terpolymer) werden in 43,3 g Ethanol gelöst. Die so erhaltene 18,75 %ige Polymerlösung wird mit Ascorbinsäure als Reduktionsmittel und Komplexligand versetzt und mindestens 3 Stunden gerührt. Dann erfolgt die Zugabe von Leukomalachitgrün und Säure, vorzugsweise in Form von HCl. Anschließend wird Hämatoporphyrin IX als Photosensibilisator zugegeben.

### Lackapplikation

Die Applikation der Lacke erfolgte mittels Rakelverfahren auf Corona-vorbehandelter CPP-Folie von 50 µm Stärke. Außerdem wurden PET-Folien beschichtet. Die Beschichtungslacke wurden mit einem 30 µm Spiralrakel aufgetragen. Die Ziehgeschwindigkeit betrug 12 mm/s. Die Aushärtung erfolgte in allen Fällen thermisch bei Raumtemperatur oder bei erhöhten Temperaturen, insbesondere zwischen 40 und 130°C.

Viele weitere Produkte sind mit den neuen, mit den erfindungsgemäßen Beschichtungslacken überzogenen Folien realisierbar.

Durch Kombination der bereits von der Anmelderin entwickelten passiven Barriereschichten mit den neuartigen aktiven Barriereschichten (Scavengerschichten), die in dieser Erfindungsbeschreibung dargestellt sind, können in Zukunft Verbundmaterialien wie kaschierte Verbundfolien bereitgestellt werden, die nicht nur für den Verpackungsbereich interessant sein werden, sondern vor allem auch für den technischen Folienbereich (z. B. Einkapselungsfolien) für die Herstellung flexibler OLEDs bzw. flexibler Polymersolarzellen. Mit solchen Kombinationsschichten (zero-permeation) können vollkommen neue Wege zur Realisierung dieser flexiblen Bauteile auf der Basis von Polymerfolien eingeschlagen werden.

Zusammenfassend betrifft die Anmeldung insbesondere:
A. Ein Lackmaterial, umfassend eine Matrix aus einem zumindest teilweise organischen Polymeren sowie mindestens eine Komponente, ausgewählt unter Komponenten, die nach geeigneter Triggerung gegenüber Sauerstoff reaktiv sind.
B. Ein Lackmaterial nach Punkt A, dadurch gekennzeichnet, dass die Komponenten, die nach Triggerung gegenüber Sauerstoff reaktiv sind, ausgewählt sind unter Komponenten, die sauerstoffzehrend sind und/oder die Gegenwart von Sauerstoff anzeigen können.
C. Ein Lackmaterial nach Punkt A oder B, dadurch gekennzeichnet, dass sich das Lackmaterial als Beschichtungslack eignet.
D. Ein Lackmaterial nach Punkt C, worin die Matrix aus einem organischen Polymermaterial besteht, die so ausgewählt ist, dass das Beschichtungsmaterial nach Trocknen klebfrei ist.
E. Ein Lackmaterial nach Punkt A oder B, dadurch gekennzeichnet, dass sich das Lackmaterial als Klebstoff eignet.
F. Ein Lackmaterial nach einem der Punkte A bis C und E, worin die Matrix aus einem anorganisch-organischen Hybridpolymeren besteht.
G. Ein Lackmaterial nach Punkt F, dadurch gekennzeichnet, dass die Matrix unter Verwendung mindestens eines hydrolysierbaren Silans, vorzugsweise eines Di- oder Trialkoxysilans, hergestellt ist.
H. Ein Lackmaterial nach Punkt G, dadurch gekennzeichnet, dass die Matrix unter Verwendung mindestens eines Silans, das eine einer organischen Polymerisations-, Additions- oder Kondensationsreaktion zugängliche Gruppe, besonders bevorzugt eine Vinyl-, eine Allyl-, eine (Meth-)Acryl oder eine Glycidylgruppe, enthält, und/oder zusätzlich unter Verwendung eines Metallalkoxids hergestellt ist, das vorzugsweise unter Alkoxiden des Aluminiums, Zirkons, Titans oder Zinns ausgewählt ist.
I. Ein Lackmaterial nach Punkt E, worin die Matrix aus einem anorganisch-organischen Hybridmaterial besteht und so ausgewählt ist, dass der Lack nach im Wesentlichen vollständigem oder teilweise erfolgendem Entfernen des darin enthaltenen Lösungsmittels unter Druck noch verklebbar ist.
J. Ein Lackmaterial nach Punkt C oder D, worin die Matrix Polyvinylalkohol und/oder ein methacrylsäurehaltiges Polymer und/oder ein Polymer auf Polyurethanbasis enthält oder in wesentlichen Teilen aus diesen Komponenten besteht.
K. Ein Lackmaterial nach einem der voranstehenden Punkte, worin die sauerstoffzehrende Komponente kovalent in die Matrix eingebunden ist.
L. Ein Lackmaterial nach Punkt K, worin die sauerstoffzehrende Komponente ein silangebundener Rest ist.
M. Ein Lackmaterial nach einem der voranstehenden Punkte, worin die sauerstoffzehrende Komponente ein organischer Rest ist, der ein zyklisches Olefin enthält.
N. Ein Lackmaterial nach einem der voranstehenden Punkte, worin die Komponente, die nach Triggerung die Gegenwart von Sauerstoff anzeigen kann, über ionische Kräfte, Van-der-Waals-Kräfte und/oder über Wasserstoffbrückenbindungen in die Matrix eingebunden ist.
O. Ein Lackmaterial nach einem der voranstehenden Punkte, worin die Komponente, die nach Triggerung die Gegenwart von Sauerstoff anzeigen kann, dessen Gegenwart durch einen Farbumschlag anzeigt.
P. Ein Lackmaterial nach Punkt O, worin die Komponente, die nach Triggerung die Gegenwart von Sauerstoff anzeigen kann, ein Leukofarbstoff ist, der vorzugsweise unter Leukomalachitgrün und Methylenblau ausgewählt ist.
Q. Ein Lackmaterial nach Punkt P, worin die Komponente, die nach Triggerung die Anwesenheit von Sauerstoff anzeigen kann, Leukomalachitgrün ist und das Lackmaterial zusätzlich Säure (Protonen), ein Reduktionsmittel und/oder einen Photosensibilisator enthält.
R. Ein Lackmaterial nach Punkt Q, worin das Reduktionsmittel Ascorbinsäure ist und/oder der Photosensibilisator Hämatoporphyrin IX ist.
S. Ein Lackmaterial nach Punkt P, worin die Komponente, die nach Triggerung die Anwesenheit von Sauerstoff anzeigen kann, Methylenblau ist und das Beschichtungsmaterial zusätzlich ein Redoxsystem enthält.
T. Ein Lackmaterial nach Punkt S, worin das Redoxsystem Ethylendiamintetreaessigsäure und/oder Riboflavin aufweist oder daraus besteht.
U. Ein Lackmaterial nach einem der voranstehenden Punkte, dadurch gekennzeichnet, dass das Triggern der Komponente(n) mit Hilfe von aktinischer Strahlung, vorzugsweise in Gegenwart eines Photosensitizers, erfolgt.
V. Ein Lackmaterial nach einem der voranstehenden Punkte, dadurch gekennzeichnet, dass es im Lebensmittelbereich eingesetzt werden kann.
W. Mit einer Beschichtung aus einem Lackmaterial nach einem der voranstehenden Punkte versehenes Substrat.
X. Mit einer Beschichtung versehenes Substrat nach Punkt W in Form eines starren oder flexiblen Verpackungsmaterials, insbesondere einer Folie.
a. Ein Verbundmaterial aus einer Mehrzahl von Schichten, die mit einem Lackmaterial nach einem der Punkte A bis V miteinander verbunden wurden.
b. Ein Verbundmaterial nach Punkt a, dadurch gekennzeichnet, dass es sich um eine Kaschierfolie handelt.
c. Ein Verbundmaterial nach einem der Punkte a oder b, das zusätzlich mit einer Beschichtung aus einem Lackmaterial gemäß einem der Punkte A bis V versehen ist.
d. Mit einer Beschichtung versehenes Substrat oder Verbundmaterial nach einem der Punkte W bis c, das lebensmittelrechtlich unbedenklich ist.
e. Mit einer Beschichtung versehenes Substrat oder Verbundmaterial nach einem der Punkte W bis c, dadurch gekennzeichnet, dass es für technische Zwecke vorgesehen ist.
f. Mit einer Beschichtung versehenes Substrat oder Verbundmaterial nach einem der Punkte W bis e, das auf seiner einen Seite, ggf. der Innenseite, mit einer Beschichtung versehen ist, die hergestellt ist aus einem Lackmaterial nach Punkt A mit einer Komponente, die die Gegenwart von Sauerstoff anzeigen kann, wobei diese Schicht zur Innenseite hin mit einer Schicht überschichtet ist, die mit einem Lackmaterial gemäß Punkt A hergestellt wurde, das eine sauerstoffzehrende Komponente enthält.
g. Mit einer Beschichtung versehenes Substrat oder Verbundmaterial nach einem der Punkte W bis e, das auf seiner einen Seite, ggf. der Innenseite, mit einer Beschichtung versehen ist, die hergestellt ist aus einem Lackmaterial nach Punkt A mit einer sauerstoffzehrenden Komponente, wobei diese Schicht zur Innenseite hin mit einer Schicht überschichtet ist, die mit einem Lackmaterial gemäß Punkt A hergestellt wurde, das die Gegenwart von Sauerstoff anzeigen kann.
h. Mit einer Beschichtung versehenes Substrat oder Verbundmaterial nach einem der Punkte W bis g, zusätzlich enthaltend mindestens eine Schicht oder Folie, die den Durchtritt von Sauerstoff hemmt oder verhindert.
i. Mit einer Beschichtung versehenes Substrat oder Verbundmaterial nach Punkt h, dadurch gekennzeichnet, dass die Barriereschicht aus einem oder unter Verwendung eines anorganisch-organischen Hybridpolymeren gebildet ist.
j. Mit einer Beschichtung versehenes Substrat oder Verbundmaterial nach Punkt h oder i, wobei die Schicht oder Folie, die den Durchtritt von Sauerstoff hemmt oder verhindert, die äußerste Schicht ist.
k. Ein Verfahren zur Herstellung eines beschichteten Substrats unter Verwendung eines Lackmaterials nach einem der Punkte A bis V als Beschichtungsmaterial.
l. Ein Verfahren zur Herstellung eines Verbundmaterials aus einer Mehrzahl von Schichten unter Verwendung eines Lackmaterials nach einem der Punkte A bis V als Kleber zum Verbinden von mindestens zweien der Mehrzahl von Schichten.

## Patentansprüche

1. Lackmaterial, umfassend eine Matrix aus einem zumindest teilweise organischen Polymeren sowie mindestens eine Komponente, ausgewählt unter Komponenten, die nach geeigneter Triggerung die Gegenwart von Sauerstoff anzeigen können.

2. Lackmaterial nach Anspruch 1, **dadurch gekennzeichnet, dass** sich das Material als Beschichtungslack eignet.

3. Lackmaterial nach Anspruch 2, worin die Matrix aus einem organischen Polymermaterial besteht, die so ausgewählt ist, dass das Beschichtungsmaterial nach Trocknen klebfrei ist.

4. Lackmaterial nach einem der Ansprüche 1 bis 3, worin die Matrix Polyvinylalkohol und/oder ein methacrylsäurehaltiges Polymer und/oder ein Polymer auf Polyurethanbasis enthält oder in wesentlichen Teilen aus diesen Komponenten besteht.

5. Lackmaterial nach einem der Ansprüche 1 bis 4, worin die Komponente, die nach Triggerung die Gegenwart von Sauerstoff anzeigen kann, dessen Gegenwart durch einen Farbumschlag anzeigt und vorzugsweise ein Leukofarbstoff ist.

6. Lackmaterial nach Anspruch 5, worin die Komponente, die nach Triggerung die Anwesenheit von Sauerstoff anzeigen kann, Methylenblau ist und das Beschichtungsmaterial zusätzlich ein Redoxsystem enthält.

7. Lackmaterial nach Anspruch 6, worin das Redoxsystem Ethylendiamintetreaessigsäure und/oder Riboflavin aufweist oder daraus besteht.

8. Lackmaterial nach einem der Ansprüche 1 bis 7, **dadurch gekennzeichnet, dass** das Triggern der Komponente(n) mit Hilfe von aktinischer Strahlung, vorzugsweise in Gegenwart eines Photosensitizers, erfolgt.

9. Mit einer Beschichtung aus einem Lackmaterial nach einem der Ansprüche 1 bis 8 versehenes Substrat.

10. Mit einer Beschichtung versehenes Substrat nach Anspruch 9 in Form eines starren oder flexiblen Verpackungsmaterials, insbesondere einer Folie.

11. Verbundmaterial aus einer Mehrzahl von Schichten, die mit einem Lackmaterial nach einem der Ansprüche 1 bis 8 verbunden wurden, das zusätzlich mit einer Beschichtung aus einem Lackmaterial gemäß einem der Ansprüche 1 bis 8 versehen ist.

12. Mit einer Beschichtung versehenes Substrat oder Verbundmaterial nach einem der Ansprüche 9 bis 11, das auf seiner einen Seite, ggf. der Innenseite, mit einer Beschichtung versehen ist, die hergestellt ist aus einem Lackmaterial nach Anspruch 1, wobei diese Schicht zur Innenseite hin mit einer Schicht überschichtet ist, die mit einem Lackmaterial hergestellt wurde, das eine sauerstoffzehrende Komponente enthält.

13. Mit einer Beschichtung versehenes Substrat oder Verbundmaterial nach einem der Ansprüche 9 bis 11, das auf seiner einen Seite, ggf. der Innenseite, mit einer Beschichtung versehen ist, die hergestellt ist aus einem Lackmaterial mit einer sauerstoffzehrenden Komponente, wobei diese Schicht zur Innenseite hin mit einer Schicht überschichtet ist, die mit einem Lackmaterial gemäß Anspruch 1 hergestellt wurde.

14. Mit einer Beschichtung versehenes Substrat oder Verbundmaterial nach einem der Ansprüche 9 bis 13, zusätzlich enthaltend mindestens eine Schicht oder Folie, die den Durchtritt von Sauerstoff hemmt oder verhindert, wobei diese Schicht vorzugsweise aus einem oder unter Verwendung eines anorganisch-organischen Hybridpolymeren gebildet ist.

15. Verfahren zur Herstellung eines beschichteten Substrats unter Verwendung eines Lackmaterials nach einem der Ansprüche 1 bis 8 als Beschichtungsmaterial.
